# EUROPEAN PATENT APPLICATION

(11) **EP 4 752 010 A1**
(43) Date of publication of application: **03.06.2026**
(21) Application number: 24216668.4
(22) Date of filing: 29.11.2024
(51) Int. Cl.: B60S 1/04, B60S 1/34

(54) **CONNECTION ASSEMBLY FOR A WIPER SYSTEM OF A VEHICULE**

(71) Applicant: Valeo Systèmes d'Essuyage, 78322 Le Mesnil Saint Denis (FR)
(72) Inventor: SPIECHA, Antoni, 32 050 Skawina (PL); SWIETEK, Wiktor, 32 050 Skawina (PL)
(74) Representative: Valeo Visibility

(57) **Abstract**

The present invention relates to a connection assembly 200 for a wiper system 10. The connection assembly 200 includes a pivot shaft 105 rotatably mounted in a through bore 104d of a pivot housing 104, and an arm head 103 attached to the shaft 105. The arm head 103 includes a shaft-receiving portion 400 having a hub 400b to receive and secure the shaft 105. A retaining means 300 is provided to restrict relative movement between the shaft 105 and the housing 104. When an impact force more than a predefined threshold force is applied on the arm head 103, the retaining means 300 breaks/deforms allowing arm head 103 with the shaft 105 to collapse. When the arm head 103 is collapsed, at least a portion of the hub 400b is received in the through bore 104d. The collapsible connection assembly 200 reduces injury to pedestrian in case of collision.

## Description

### TECHNICAL FIELD OF THE INVENTION

The present invention relates to a wiper system for a vehicle, and more particularly to a breakable or collapsible connection assembly for a vehicle wiper system, for pedestrian collision safety.

### BACKGROUND OF THE INVENTION

The wiper system traditionally consists of one or more wiper assemblies driven by a wiper motor. The wiper assembly may include a wiper arm, one end of which is connected to an output shaft of the wiper motor through linkages and a wiper blade is attached to another end of the wiper arm. The wiper motor drives the wiper arm to swing between the predefined angular positions to wipe off the water and dirt present on the windshield. The wiper arm may include an arm head attached to a rotatable pivot shaft which is driven by the wiper motor through linkages such as a drive lever. The pivot shaft may be rotatably supported by a pivot housing fixedly mounted on the vehicle.

When assembled on the vehicle, a top portion of the pivot shaft and/or the arm head of the wiper arm may protrude above the exterior surface of the vehicle, in particular hood/bonnet. In the event of a collision with a pedestrian, there is a likelihood of said pedestrian being thrown onto the hood and/or windshield of the vehicle. In this scenario, the head and/or torso of the pedestrian may hit the protruding portions of the wiper system. As the pivot shaft, apart from being rotatable in the pivot housing, is fixed with the vehicle structure, the pedestrian may incur severe injury during collision.

The prior art and the conventional wiper system have various disadvantages as described above and there is a need for a wiper assembly for vehicle wiper system, that can overcome, or at least mitigate, the disadvantages of the conventional wiper system.

### SUMMARY OF THE INVENTION

In this context, the present invention is directed towards a connection assembly for a vehicle wiper system. The connection assembly comprises a pivot shaft, a pivot housing, and an arm head. The pivot shaft may comprise an upper end, a lower end, and a main body extending between the upper end and the lower end. Preferably, the pivot shaft may be provided in the form of a tubular member that can be solid or hollow. The pivot housing may include a through bore to receive and rotatably support at least a portion of the pivot shaft about a pivot axis X. The pivot axis X substantially coincides with the central axis of the through bore of the pivot housing and/or with the longitudinal axis of the pivot shaft.

Advantageously, a predefined clearance may be provided between the portion of the pivot shaft received in the through bore and the through bore of the pivot housing. Additionally, components such as, but not limited to, bushing(s), bearing(s), and/or O-ring(s) may be provided in the through bore to support the pivot shaft and to facilitate the rotation of the pivot shaft in the through bore for desired functioning of the connection assembly.

The arm head is adapted to be attached to one end of a wiper arm. Preferably, the arm head may be attached to an end of the wiper arm opposite to the end to which wiper blade is attached. The arm head includes a shaft-receiving portion adapted to receive at least a portion of the pivot shaft. The shaft-receiving portion may include a hub extending from a base along the pivot axis X, towards the pivot housing. The hub may have a substantially cylindrical shape.

The hub comprises a through hole to receive at least a portion of the pivot shaft. A portion of the hub near the upper end of the pivot shaft is received in the through hole of the hub of the shaft-receiving portion. At least a portion of the hub may be adapted to be received in the through bore.

Preferably, when the arm head along with the pivot shaft collapses i.e. when the arm head moves towards the pivot housing in an event of impact on the arm head and/or the pivot shaft, at least a portion of the hub is received in the through bore of the pivot housing. This allows the base of the arm head to move closer to the pivot housing, thereby improving absorption of impact energy to minimize injuries to the pedestrians.

In a non-limiting embodiment of the present invention, the outer diameter D4 of the hub near the base may be less than the diameter of the through bore at an upper end of the pivot housing. The clearance between the hub and the through bore may allow the insertion of the hub in the through bore of the pivot housing, when the arm head along with the pivot shaft collapses with respect to the pivot housing.

In a non-limiting embodiment of the present invention, the outer diameter D4 of the hub may decrease from the base towards the pivot housing, along the pivot axis X. In other words, the outer surface of the hub may be tapered such that it centers the hub within the through bore of the pivot housing, thereby facilitating the collapse of the arm head.

In a non-limiting embodiment of the present invention, at least one retaining means may be provided on the pivot shaft to limit the relative movement of the pivot shaft with respect to the pivot housing along the pivot axis X. In normal use of the wiper system, the retaining means may be provided to restrict movement of the pivot shaft with respect to the pivot housing in downward direction along the pivot axis X.

In a non-limiting embodiment of the present invention, the at least one retaining means may include a C-clip received in a groove formed on the main body of the pivot shaft. Further, a first flat washer may be provided on the pivot shaft between the C-clip and the pivot housing. The first flat washer may have a predefined clearance with the pivot shaft, thereby improving the support for the pivot shaft along the pivot axis X. The C-clip may be adapted to deform radially outwards when the C-clip is pushed against a tapered upper edge of the groove, so the C-clip may come out of the groove and allow the pivot shaft to slide downwards in the through bore of the pivot housing under application of the impact force being greater than a predefined threshold force. Therefore, when an impact force exceeding a predefined threshold force is applied on the arm head and/or the pivot shaft, the C-clip allows the pivot shaft along with the arm head to collapse, thereby absorbing the energy of the impact.

Alternatively, the at least one retaining means may include a collar provided on the main body of the pivot shaft. The collar may be overmolded on the pivot shaft at a predefined location. The collar may be integrally formed with the pivot shaft and may rest directly or indirectly on the pivot housing. Alternatively, the collar may be attached to the pivot shaft by a suitable attaching means. The collar may be adapted to break/detach from the pivot shaft under application of impact force exceeding a predefined threshold force on the arm head and/or the pivot shaft. Preferably, the collar may be made of plastic. However, the collar may be made of any suitable material provided that the collar breaks/detaches from the pivot shaft under a predefined impact force on the pivot shaft.

Alternatively, at least one retaining means may include a ring provided on the main body of the pivot shaft. Preferably, the ring may be press fitted or installed around the pivot shaft by any known means. The ring may directly or indirectly rest/cooperate with the upper end of the pivot housing. The ring may restrict the movement of the pivot shaft relative to the pivot housing. The ring may be substantially circular in shape. The ring may be adapted to break and/or detach from the pivot shaft under a predefined threshold force acting on the pivot shaft. Preferably, the ring may be made of steel, aluminium, non-ferrous alloys, plastic or any other suitable material that may break and/or detach under the predefined threshold force.

In a non-limiting embodiment of the present invention, the at least one retaining means may be adapted to deform and/or break under an impact force on the arm head exceeding a predefined threshold force. Where a C-clip is provided as a retaining means, the C-clip may radially deform under application of a predefined impact force on the pivot shaft/arm head allowing the pivot shaft to collapse in the through bore of the pivot housing. Whereas, in case of the collar provided on the pivot shaft, the collar may break/detach from the pivot shaft under application of a predefined impact force on the pivot shaft/arm head allowing the pivot shaft to collapse in the through bore of the pivot housing.

In a non-limiting embodiment of the present invention, the shaft-receiving portion may further comprise a sidewall extending from the base along the pivot axis X, towards the pivot housing. The sidewall may include a curved portion at least partially surrounding the hub. A predefined radial clearance may be provided between the curved portion of the sidewall and the hub such that, when the arm head collapses towards the pivot housing, the hub is received in the through bore of the pivot housing and at least a portion near an upper end of the pivot housing may be received in the said radial clearance.

In a non-limiting embodiment of the present invention, the inner diameter D5 of the curved portion may be greater than the outer diameter D6 of the pivot housing near the upper end of the pivot housing. This difference between the diameters reduces the likelihood of the sidewall binding against or otherwise impacting the pivot housing when the arm head collapses over the pivot housing.

The present invention also relates to a wiper assembly for a vehicle wiper system. The wiper assembly may include a wiper blade attached to a first end of a wiper arm. The wiper assembly may further include the connection assembly as described above. The arm head may be secured to a second end of the wiper arm. The wiper arm may swing about the pivot axis of the connection assembly to swing the wiper blade over vehicle windshield to wipe off water and/or dirt present on the windshield. The wiper assembly may include other known components which may be required for proper functioning of the wiper assembly.

The present invention also relates to a wiper system for a motor vehicle. The wiper system may include at least one wiper assembly as described above and at least one wiper motor adapted to rotate the pivot shaft of the connection assembly through a linkage. The wiper system may be provided for cleaning a vehicle windshield or window etc. Preferably, the wiper system may include two wiper assemblies driven by the wiper motor through suitable linkages, to wipe off the water and dirt present on the windshield. The wiper system may include other known components which may be required for proper functioning of the wiper system.

### BRIEF DESCRIPTION OF DRAWINGS

Figure 1 illustrates a schematic perspective view of a wiper system for a motor vehicle;
Figure 2 illustrates a schematic perspective view of a wiper assembly of the wiper system;
Figure 3 illustrates a schematic perspective view of a connection assembly of the wiper assembly, according to a first embodiment of the present invention;
Figure 4 illustrates a schematic top view of the connection assembly of Figure 3;
Figure 5 illustrates a sectional view of the connection assembly of Figure 3, taken along line A-A' shown in Figure 4;
Figure 6 a schematic perspective view of an arm head of the connection assembly of Figure 3;
Figure 7 illustrates a sectional view of the arm head of the connection assembly of Figure 3, taken along line B-B' in Figure 6;
Figure 8A illustrates an enlarged view of the zone Z1 of Figure 5, of the connection assembly of Figure 3;
Figure 8B illustrates an enlarged view of zone Z2 of Figure 8A, of the connection assembly of Figure 3;
Figure 8C illustrates the connection assembly of Figure 3;
Figure 8D illustrates an enlarged view of zone Z3 of Figure 5, of the connection assembly of Figure 3;
Figure 9A illustrates a sectional view of the connection assembly, according to a second embodiment of the present invention;
Figure 9B illustrates a sectional view of the connection assembly, according to a third embodiment of the present invention; and
Figure 10 illustrates a sectional view of collapsed state of the connection assembly according to the invention.

### DETAILED DESCRIPTION OF THE INVENTION

The characteristics, variants and different modes of realization of the invention may be associated with each other in various combinations, in so far as they are not incompatible or exclusive with each other. In particular, variants of the invention comprising only a selection of features subsequently described in from the other features described may be imagined, if this selection of features is enough to confer a technical advantage and/or to differentiate the invention from prior art.

The following embodiments are examples. Although the description refers to one or more embodiments, this does not necessarily mean that each reference is to the same embodiment, or that the features apply only to one embodiment. Simple features of different embodiments may also be combined and/or interchanged to provide further embodiments.

In the present description, certain elements or parameters may be indexed, for example first element or second element as well as first parameter and second parameter or first criterion and second criterion, etc. In this case, it is a simple indexing operation to differentiate and name elements or parameters or criteria which are close, but not identical. In this case, simple indexing is used to differentiate and name elements or parameters or criteria which are close, but not identical. This indexing does not imply that one element, parameter or criterion has priority over another, and such names can easily be interchanged without going beyond the scope of this description. Nor does this indexing imply an order in time, for example to assess a particular criterion.

In addition, the designations 'lower' and 'upper' with respect to the elements of the pivot assembly are understood with respect to the orientation of the pivot assembly when the wiper assembly is mounted on the vehicle, a lower end/side of such elements corresponding to the end/side disposed towards road/ground, while an upper end/side corresponds to the end/side disposed away from the road/ground. Further, the terminologies 'upward' and 'downward' are also understood with respect to the orientation of the pivot assembly when the wiper assembly is mounted on the vehicle.

It is to be understood that as a large number of the components in a vehicle wiper system are conventional, such are not shown in detail in order that the features of the present invention may be more clearly identified.

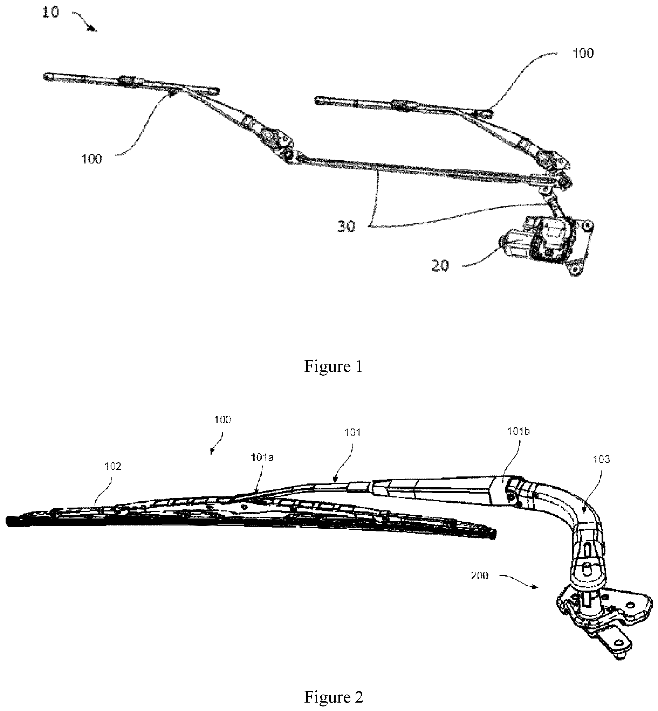

Figure 1 illustrates a wiper system 10 for a motor vehicle. The wiper system 10 may include a pair of wiper assemblies 100, such as a pair of right and left wiper assemblies 100 provided for cleaning a windshield (not shown) of the motor vehicle. The wiper assemblies 100 may be driven by a wiper motor 20 through suitable linkages 30, to wipe off the water and/or dirt present on the windshield.

As shown in Figure 2, the wiper assembly 100 may include a wiper arm 101 having a first end 101a and a second end 101b. The first end 101a of the wiper arm 101 may be attached to a wiper blade 102. The wiper blade 102 may include at least one wiper strip (rubber) intended to be in contact with the surface of the windshield to be cleaned. The wiper blade 102 may be secured to the first end 101a of the wiper arm 100 by a suitable attaching means such as but not limited to a connector and/or an adapter etc. The second end 101b of the wiper arm 101 may be connected to an arm head 103 of a connection assembly 200 such that the wiper arm 200 may swing about a pivot axis X of the connection assembly 200.

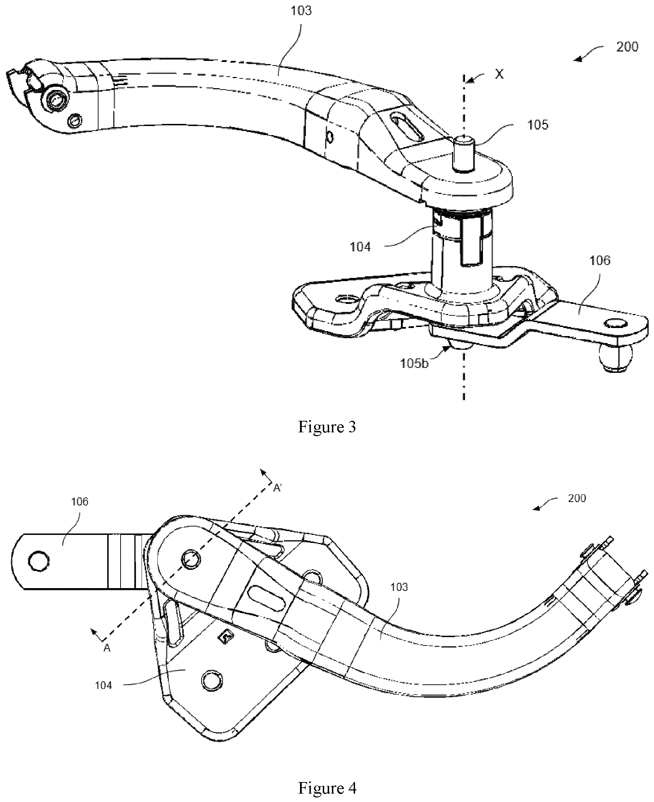

Figures 3 and 4 illustrate the connection assembly 200, according to an exemplary first embodiment of the present invention. The connection assembly 200 may include the arm head 103, a pivot housing 104, a pivot shaft 105 and a drive lever 106. The arm head 103 may be connected to the pivot shaft 105. The arm head 103 may be further attached to one end of the pivot shaft 105. The pivot shaft 105 may be rotatably supported in the pivot housing 104. The pivot housing 104 may be fixedly mounted on a vehicle structure (not shown). The other end of the pivot shaft 105 may be attached to the drive lever 106. The drive lever 106 may be attached to the pivot shaft 105 near a lower end 105b of the pivot shaft 105, such that the drive lever 106 may be driven by the wiper motor 20 to rotate the pivot shaft 105 in the pivot housing 104. The drive lever 106 may be longitudinally and rotatably fixed to the pivot shaft 105 by *e.g.* a press-fit joint and a clip (not shown). It is to be understood that any other known securing means may be used to secure the drive lever 106 to the pivot shaft 105.

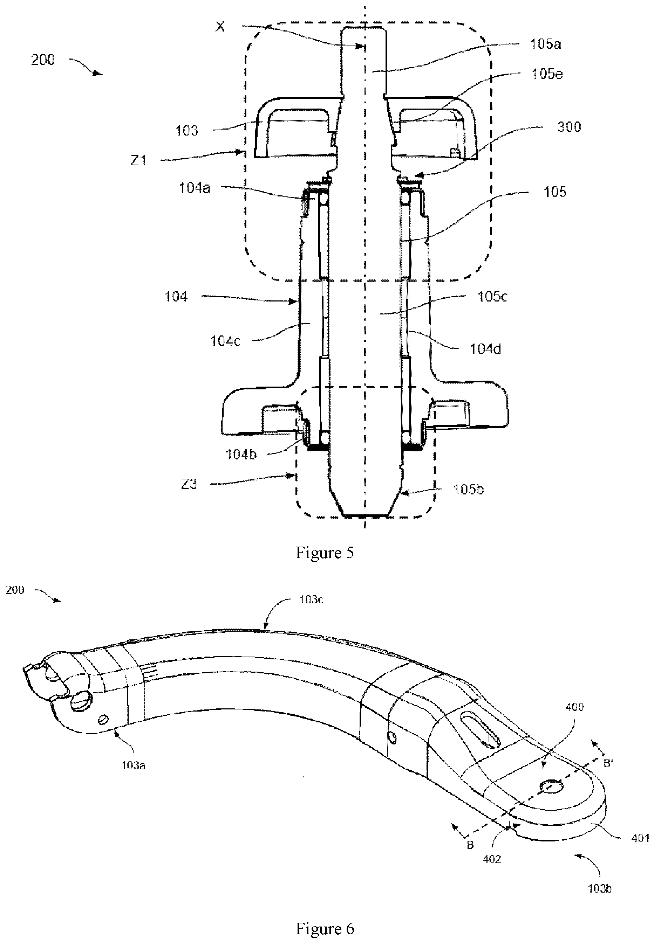

Figure 5 illustrates a sectional view of the connection assembly 200 taken along line A-A' in Figure 4, according to the first embodiment of the present invention. The pivot housing 104 of the connection assembly 200 may have an upper end 104a and a lower end 104b opposite to the upper end 104a. A main body 104c may connect upper end 104a and lower end 104b of the pivot housing. The pivot housing 104 may include the through bore 104d extending from the upper end 104a to the lower end 104b. Preferably, the through bore 104d may have a circular cross-section.

As shown in Figure 5, the pivot shaft 105 may have an upper end 105a, a lower end 105b opposite to the upper end 105a, and a cylindrical main body 105c extending between the upper end 105a and the lower end 105b. The pivot shaft 105 may have a knurled portion 105e near the upper end 105a. The knurled portion 105e may be tapered having cross section area increasing towards the lower end 105b, along the pivot axis X. The knurled portion 105e may be attached to the arm head 103.

Preferably, the pivot shaft 105 may be provided in the form of a tubular member, which can be solid or hollow. The pivot shaft 105 may be inserted in the through bore 104d of the pivot housing 104 such that at least a portion of the pivot shaft 105 near knurled portion 105e, extends outside of the through bore 104d of the pivot housing 104. Further, at least a portion of the pivot shaft 105 near the lower end 105b, may extend outside of the through bore 104d of the pivot housing 104. A predefined clearance may be provided between the pivot shaft 105 and the through bore 104d of the pivot housing 104. The pivot housing 104 may have bushings and/or O-rings or bearings disposed between the pivot shaft 105 and the through bore 104d. The connection assembly 200 may have a retaining means 300 provided near the upper end 104a of the pivot housing 104 to hold the pivot shaft 105 in the through bore 104d by restricting downward movement of the pivot shaft 105 with respect to the pivot housing 104 along the pivot axis X. The connection assembly 200 may have one or more washers and/or discs disposed between the retaining means 300 and the upper end 104a of the pivot housing 104.

Figure 6 illustrates the arm head 103 of the connection assembly 200, according to the first embodiment of the present invention. The arm head 103 may include first end 103a adapted to be attached to the second end 101b of the wiper arm 101. The arm head 103 may include second end 103b adapted to be attached to the pivot shaft 105. The second end 103b of the arm head 103 may have a shaft-receiving portion 400, as shown in Figure 6. The arm head 103 may be connected to the pivot shaft 105 such that the wiper arm 101 may be rotated between predefined angular positions about the pivot axis X.

As shown Figure 5, the arm head 103 may be secured to the pivot shaft 105 by any locking means (not shown), more specifically to the exposed portion of the pivot shaft 105 near the upper end 105a, such that rotation of the arm head 103 is restricted with respect to the pivot shaft 105. The locking means may hold the arm head 103 in its position near to upper end 105a of the pivot shaft 105, restricting the movement of the arm head 103 with respect to the pivot shaft 105 about a longitudinal axis of the pivot shaft 105. It is to be noted that the longitudinal axis of the pivot shaft 105 substantially coincides with the pivot axis X of the pivot assembly 400; for the purposes of this document and for ease of understanding, these terminologies may be interchangeably used and are denoted by reference X.

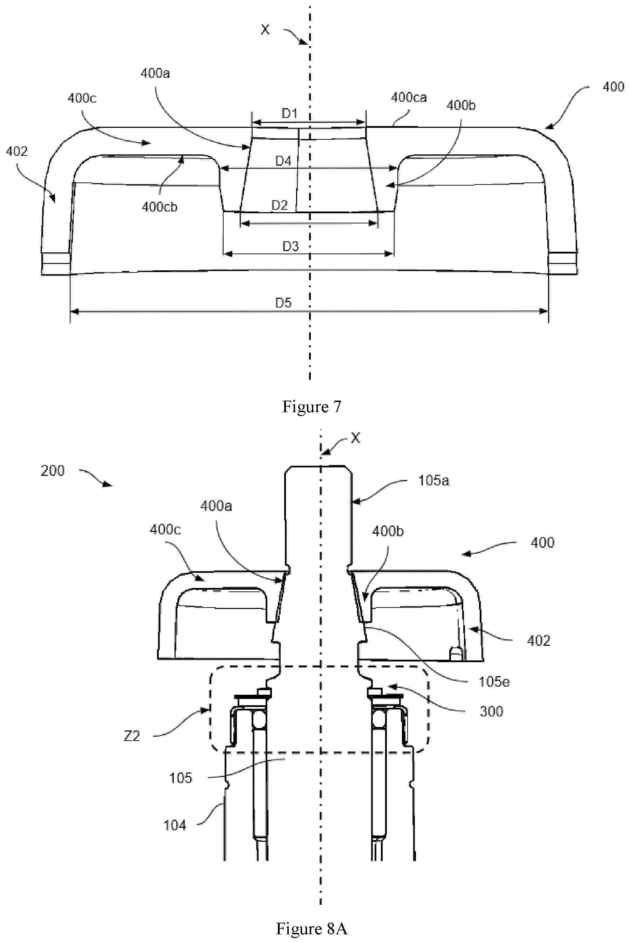

Figure 7 illustrates a sectional view of the arm head 103 taken along line B-B' in Figure 6, according to the first embodiment of the present invention. The shaft-receiving portion 400 of the arm head 103 may include a hole 400a, a hub 400b, a base 400c, and a sidewall 402. The base 400c of the shaft-receiving portion 400 may have a first end 400ca and a second end 400cb. The first end 400ca may have the through hole 400a having a first diameter D1. The hole 400a may extend from the first end 400ca of the base 400c in the direction towards pivot housing 104, along the longitudinal axis X of the pivot shaft 105. The hole 400a may have varying cross section, along the pivot axis X of the pivot shaft 105. The hole 400a may have first diameter D1 and second diameter D2. Preferably, the diameter D1 of the hole 400a may be lesser than diameter D2.

The hole 400a receives the knurled portion 105e of the pivot shaft 105 such that the knurled portion 105e engages with the internal surface of the hole 400a to rotatably fix the arm head 103 with the pivot shaft 105. It is to be noted that cross section of the hole 400a compliments the knurled portion 105e of the pivot shaft 105. The hole 400a may have a smooth internal surface that is deformed upon receiving the knurled portion 104e of the pivot shaft 105. Alternately, the hole 400a may have a knurled internal surface, such that the knurled portion 104e of the pivot shaft 105 cooperates with the knurled internal surface of the hole to rotatably fix the arm head 103 with the pivot shaft 105.

The hub 400b may extend from the second end 400cb of the base 400c in the direction towards the pivot housing 104, along the pivot axis X. The hub 400b may be substantially cylindrical in shape. The hub 400b may have diameter D4 taken at the base of the hub 400b near the second end 400cb of the base 400c. The hub 400b may have diameter D3 taken at the opposite end of the hub 400b, along the pivot axis X. Preferably, the diameter D3 of the hub 400b may be lesser than diameter D4.

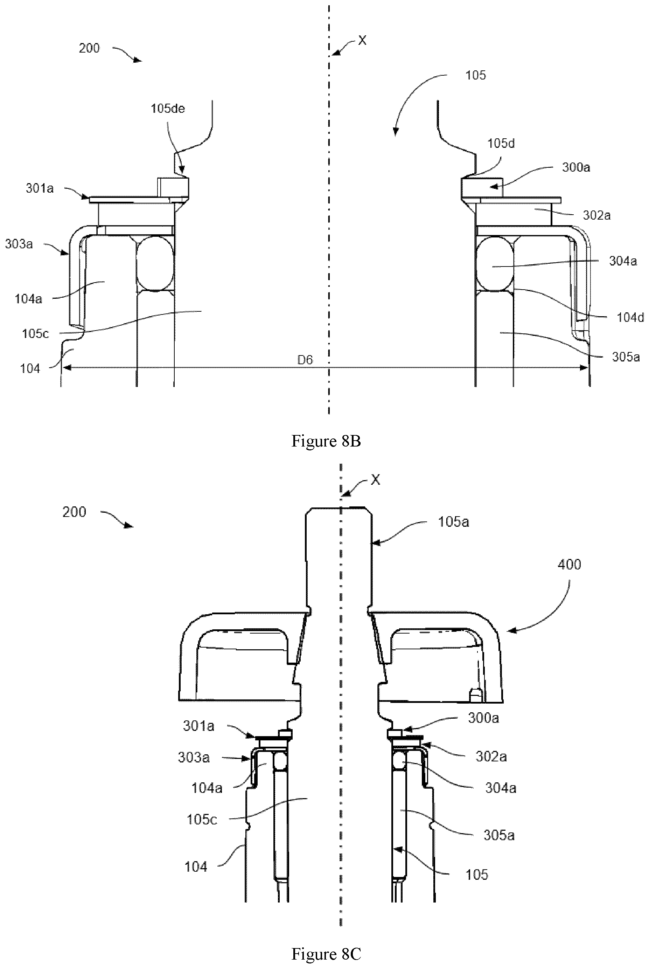

Advantageously, the outer surface of the hub 400b may be tapered such that it may center the hub 400b within the through bore 104d of the pivot housing 104 to facilitate the collapse of the arm head 103. Alternatively, the diameter D3 of the hub 400b may be equal to the diameter D4. The sidewall 402 may extend from the base 400c towards the pivot housing 104 and may have a curved portion 401 (refer Figure 6) partially surrounding the hub 400b. It is to be noted that the curved portion 401 may be surrounding the hub 400b, making the arrangement concentric about the pivot axis X and forming a substantially semicircular portion (not shown) around the hub 400b. Preferably, the inner diameter D5 of the curved portion 401 may be greater than the outer diameter D6 (refer Figure 8B) of the upper end 104a of the pivot shaft 105. The sidewall 402 of the shaft-receiving portion 400 may extend in the direction opposite to the base 400c towards upper end 104a of the pivot housing 104, along the pivot axis X.

Figure 8A illustrates sectional view of the connection assembly 200, according to the first embodiment of the present invention. Preferably, the arm head 103 of the connection assembly 200 may be attached near the upper end 105a of the pivot shaft 105. As shown in the Figure 8A, the arm head 103 may be mounted on the knurled portion 105e of the pivot shaft 105. The knurled portion 105e may be received in the hole 400a of the shaft-receiving portion 400. The hub 400b of the shaft-receiving portion 400 may be secured to the knurled portion 105e of the pivot shaft 105. It is to be noted that arm head 103, pivot shaft 105, and pivot housing 104 are aligned concentrically, about the pivot axis X of the connection assembly 200 effectively provides a one assembly.

Figure 8B illustrates enlarged view of zone Z2 in Figure 8A of the connection assembly 200. According to the first embodiment of the present invention, the pivot shaft 105 may have the retaining means 300 provided on the main body 105c of the pivot shaft 105. The pivot shaft 105 may have a groove 105d formed on the main body 105c of the pivot shaft 105. The groove 105d may receive a C-Clip 300a partially surrounding the pivot shaft 105. The groove 105d may have substantially circular, square, or V-type cross section. Preferably, the groove 105d may have a trapezoidal cross section as shown in Figure 8B. The C-clip 300a may engage the groove 105d to restrain the longitudinal movement of the pivot shaft 105 relative to the pivot housing 104.

As shown in Figure 8B, the main body 105c of the pivot shaft 105 may be received in the through bore 104d of the pivot housing 104 such that the C-clip 300a may directly or indirectly rest on the upper end 104a of the pivot housing 104.

When an impact force greater than a predefined threshold force is applied directly or indirectly to the pivot shaft 105, the C-clip 300a is pressed against a tapered upper edge 105de of the groove 105d, and is thereby deformed radially outwards, away from the pivot axis X. As a result, the C-clip 300a comes out of the groove 105d, allowing the pivot shaft 105 to slide downwards and subsequently collapsing the arm head 103 towards the pivot housing 104. the overall height of the connection assembly 200 is thus reduced and the impact energy effectively dissipated.

As shown in the Figure 8C, the pivot shaft 105 may have the C-clip 300a mounted in the groove 105d. The C-clip 300a may be disposed on a first washer 301a on the upper end 104a of the pivot housing 104. Additionally, the first washer 301a may be rested on the first flat washer 302a. Further, the first flat washer 302a may be rested on the first disc 303a. The first disc 303a may be rested on the upper end 104a of the pivot housing 104. Further, the pivot housing 104 may have a first O-ring 304a disposed inside the through bore 104d, below first disc 303a near the upper end 104a of the pivot housing 104. Such arrangement prevents the escape of the first O-ring 304a from the through hole 104d. The pivot housing 104 may have a first bushing 305a may be inserted between the pivot shaft 105 and the through bore 104d of the pivot housing 104 next to the first O-ring, in the direction along the pivot axis X.

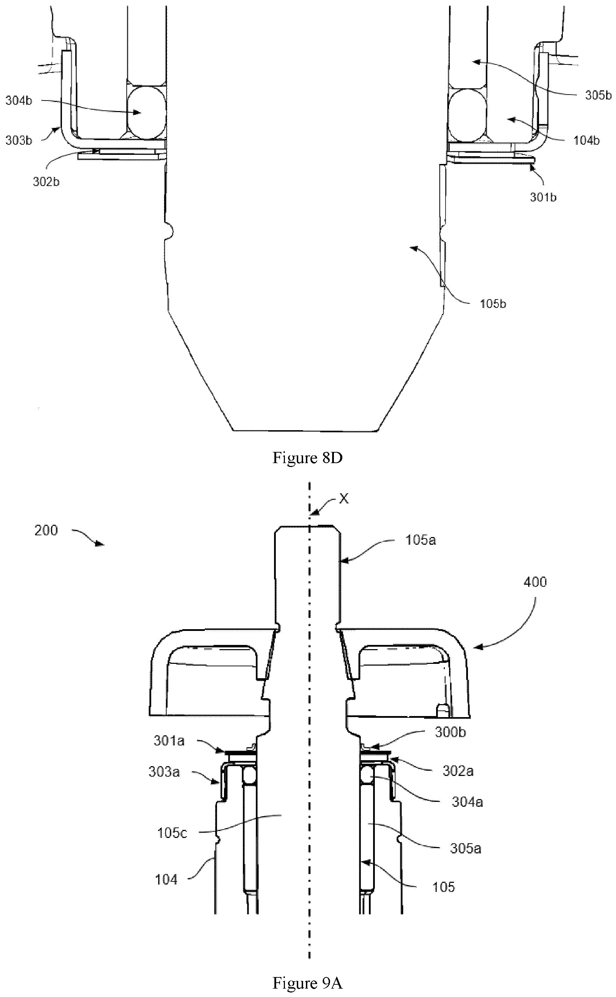

Preferably, a similar arrangement of a second O-ring 304b and a second bushing 305b may be disposed near the lower end 104b of the pivot housing 104 (refer Figure 8D). As shown in Figure 8D, the arrangement of washers 301b, 302b, and disc 303b may be disposed at the lower end 104b of the pivot housing 104 between the pivot housing 104 and the drive lever 106, to limit axial play between the pivot shaft 105 and the pivot housing 104. It is to be noted that an arrangement of washers, discs, bushings, and/or O-rings may be utilized in the connection assembly 200 to reduce axial play and maintain the structural integrity of the assembly.

Figure 9A illustrates the connection assembly 200, according to a second embodiment of the present invention. The retaining means 300 may include a ring 300b disposed around the main body 105c. Preferably, the ring 300b may be press fitted or installed around the pivot shaft 105 by any known means. The ring 300b may directly or indirectly rest/cooperate with the upper end 104a of the pivot housing 104. The ring 300b may restrict the movement of the pivot shaft 105 relative to the pivot housing 104. The ring 300b may be substantially circular in shape. The ring 300b may be adapted to break and/or detach from the pivot shaft 105 under a predefined threshold force acting on the pivot shaft 105. Preferably, the ring 300b may be made of steel, aluminum, non-ferrous alloys, plastic or any other suitable material that may break and/or detach under the predefined threshold force.

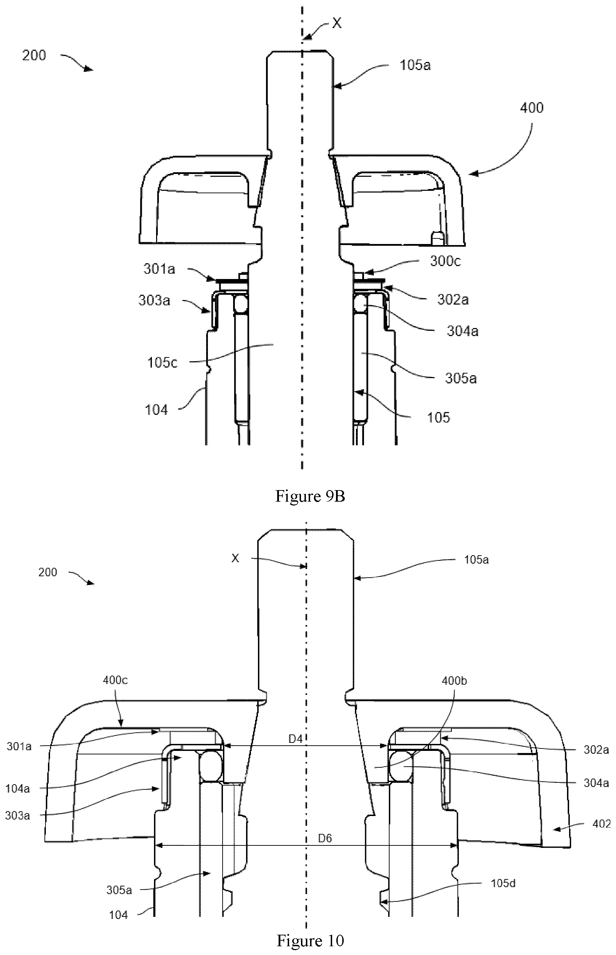

Figure 9B illustrates the connection assembly 200, according to a third embodiment of the present invention. The retaining means 300 may include a collar 300c disposed around the main body 105c of the pivot shaft 105. Preferably, the collar 300c is over molded on the main body 105c of the pivot shaft 105. Alternatively, the collar 300c may be formed integrally with the main body 105c of the pivot shaft 105or press fitted or installed on the main body 105c of the pivot shaft 105 by any known means. The collar 300c may directly or indirectly rest/cooperate with the upper end 104a of the pivot housing 104. The collar 300c may restrict the movement of the shaft relative to the through bore 104d of the pivot housing 104. The collar 300c may be substantially circular in shape. Preferably, the collar 300c is made of steel, aluminum, non-ferrous alloys, plastic or any other suitable material that may break and/or detach under the predefined threshold force.

Figure 10 illustrates the connection assembly 200, in a collapsed state such as after a collision. In the event of a collision with pedestrian, the impact force is transferred to the connection assembly 200. The movement of the arm head 103 relative to the pivot shaft 105 may be restricted due to the varying cross section of the knurled portion 105e near upper end 105a of the pivot shaft 105. The impact force applied on the arm head 103 and/or the pivot shaft 105, may deform/break/detach the retaining means 300 disposed around the pivot shaft 105. This results in the collapse of the pivot shaft 105 in the through bore 104d of the pivot housing 104 thereby absorbing the impact energy.

Further, sliding of the pivot shaft 105 into the through bore 104d may be restricted when the base 400c of the shaft-receiving portion 400 rests directly or indirectly on the upper end 104a of the pivot housing 104 as shown in the Figure 10. In such events, the hub 400b of the arm head 103 may be received in the through bore 104d of the pivot housing 104.

It is to be noted that the diameter D4 of the hub 400b at the base is less than the diameter of the through bore 104d. Further, the inner diameter D5 of the curved portion 401 may be less than outer diameter D6 near the upper end 104a of the pivot housing 104. Thus, the sidewall 402 may surround the pivot housing 104 near the upper end 104a such that the curved portion 401 of the sidewall 402 and the pivot housing 104 may be concentric to each other about the pivot axis X. The upper end of the pivot housing 104a may be received in the radial gap/clearance between the hub 400b and the sidewall 402.

This results in a considerable reduction in the overall height of the connection assembly 200, and an effective absorption of maximum impact energy during a pedestrian collision.

The invention shall not, however, be limited to the means and configurations described and illustrated herein, and shall also extend to any equivalent means or configuration described and illustrated herein, and to any technical combination operating such means.

### LIST OF REFERENCE SIGNS

| | |
|---|---|
| 10 | Wiper system |
| 20 | Wiper motor |
| 30 | Linkages |
| 100 | Wiper assembly |
| 101 | Wiper Arm |
| 101a | First end |
| 101b | Second end |
| 102 | Wiper Blade |
| 103 | Arm Head |
| 103a | First End |
| 103b | Second End |
| 103c | Main Body |
| 104 | Pivot Housing |
| 104a | Upper End |
| 104b | Lower End |
| 104c | Main Body of pivot housing |
| 104d | Through Bore |
| 105 | Pivot Shaft |
| 105a | Upper end of the Pivot Shaft |
| 105b | Lower end of the Pivot Shaft |
| 105c | Main body of the Pivot Shaft |
| 105d | Groove |
| 105de | Upper edge |
| 105e | Knurled Portion |
| 106 | Drive lever |
| 200 | Connection Assembly |
| 300 | Retaining means |
| 300a | C-clip |
| 300b | Ring |
| 300c | Collar |
| 301a | First Washer |
| 301b | Second Washer |
| 302a | First Flat Washer |
| 302b | Second Flat washer |
| 303a | First Disc |
| 303b | Second Disc |
| 304a | First O-ring |
| 304b | Second O-ring |
| 305a | First Bushing |
| 305b | Second Bushing |
| 400 | Shaft-receiving portion |
| 400a | Hole |
| 400b | Hub |
| 400c | Base |
| 400ca | First side of base |
| 400cb | Second side of the base |
| 401 | Curved Portion |
| 402 | Sidewall |
| D1 | First diameter of hole of arm head |
| D2 | Second diameter of hole of arm head |
| D3 | First diameter of hub |
| D4 | Second diameter of hub |
| D5 | Inner diameter of Curved portion |
| D6 | Outer diameter of pivot housing |

## Claims

1. A connection assembly (200) for a vehicle wiper system (10), the connection assembly (200) comprising:
a pivot shaft (105) comprising an upper end (105a), a lower end (105b), and a main body (105c) extending between the upper end (105a) and the lower end (105b);
a pivot housing (104) comprising a through bore (104d) to receive and rotatably support at least a portion of the pivot shaft (105) about a pivot axis (X); and
an arm head (103) configured to be attached to a wiper arm (101), the arm head (103) comprising a shaft-receiving portion (400) configured to receive at least a portion of the pivot shaft (105),
wherein the shaft-receiving portion (400) includes a hub (400b) extending from a base (400c) along the pivot axis (X) , towards the pivot housing (104), the hub (400b) comprising a through hole (400a) to receive at least a portion of the pivot shaft (105), and
wherein at least a portion of the hub (400b) is configured to be received in the through bore (104d).

2. The connection assembly (200) according to claim 1, wherein the outer diameter (D4) of the hub (400b) proximate to the base (400c) is less than the diameter of the through bore (104d) at an upper end of the pivot housing (104).

3. The connection assembly (200) according to claim 2, wherein the outer diameter (D4) of the hub (400b) decreases from the base (400c) towards the pivot housing (104), along the pivot axis (X).

4. The connection assembly (200) according to any of the preceding claims, wherein at least one retaining means (300) is provided on the pivot shaft (105) to limit relative movement of the pivot shaft (105) with respect to the pivot housing (104) along the pivot axis (X).

5. The connection assembly (200) according to claim 4, wherein the at least one retaining means (300) comprises a C-clip (300a) received in a groove (105d) formed on the main body (105c) of the pivot shaft (105).

6. The connection assembly (200) according to claim 4, wherein the at least one retaining means (300) comprises a collar (300c) provided on the main body (105c) of the pivot shaft (105).

7. The connection assembly (200) according to claim 4, wherein the at least one retaining means (300) comprises a ring (300b) provided on the main body (105c) of the pivot shaft (105).

8. The connection assembly (200) according to any of claims 4 to 7, wherein the at least one retaining means (300) is configured to deform and/or break under an impact force on the arm head (103) exceeding a predefined threshold force.

9. The connection assembly (200) according to any of the preceding claims, wherein the shaft-receiving portion (400) further comprises a sidewall (402) extending from the base (400c) along the pivot axis (X), towards the pivot housing (104), the sidewall (402) comprising a curved portion (401) at least partially surrounding the hub (400b).

10. The connection assembly (200) according to claim 9, wherein the inner diameter (D5) of the curved portion (401) is greater than the outer diameter (D6) of the pivot housing (104) near the upper end of the pivot housing (104).

11. A wiper assembly (100) for a vehicle wiper system (10), the wiper assembly (100) comprising:
a wiper blade (102) attached to a first end (101a) of a wiper arm (101); and
the connection assembly (200) according to any of the preceding claims,
wherein the arm head (103) is secured to a second end (101b) of the wiper arm (101).

12. A wiper system (10) for a motor vehicle, the wiper system comprising:
at least one wiper assembly (100) according to claim 11; and
at least one wiper motor (20) configured to rotate the pivot shaft (105) of the connection assembly (200) through a linkage (30).
